(19) Europäisches Patentamt

European Patent Office

Office européen des brevets

(11) Numéro de publication: **0 240 646**
**A1**

(12) # DEMANDE DE BREVET EUROPEEN

(21) Numéro de dépôt: 86440060.1

(51) Int. Cl.⁴: **F16L 21/06**

(22) Date de dépôt: **11.07.86**

(30) Priorité: **10.04.86 FR 8605396**

(43) Date de publication de la demande:
**14.10.87 Bulletin 87/42**

(84) Etats contractants désignés:
**AT BE CH DE GB IT LI LU NL SE**

(71) Demandeur: **AWAB S.A.**
**37 rue Jean Froissart**
**F-59200 Tourcoing(Nord)(FR)**

(72) Inventeur: **Jeanguenin, Pierre**
**8 rue Mattern**
**F-25200 Montbéliard (Doubs)(FR)**
Inventeur: **Liebert, Jean-Pierre**
**40 rue du Foyer Dottignien**
**B-7760 Dottignies(BE)**
Inventeur: **Matter, Claude**
**3 allée des Mésanges**
**F-78200 Magnanville (Yvelines)(FR)**
Inventeur: **Paquit, Philippe**
**2 rue de Pérousse**
**F-90150 Chevremont (Belfort)(FR)**
Inventeur: **VanMeenen, Freddy**
**91 rue des Déportés**
**B-7701 Mouscron(BE)**

(74) Mandataire: **Lepage, Jean-Pierre**
**Cabinet Lepage & Aubertin Innovations et**
**Prestations 23/25, rue Nicolas Leblanc B.P.**
**1069**
**F-59011 Lille Cédex 1 (Nord)(FR)**

(54) **Collier de serrage.**

(57) L'invention est relative à un collier de serrage. Elle trouvera notamment son application dans l'industrie automobile pour assurer le raccordement et le serrage des différents éléments d'une ligne d'échappement.

Elle vise plus particulièrement le raccordement de tuyaux placés bout à bout. Le collier (1) est formé d'une bande flexible (2) cintrée en boucle ouverte destinée à ceinturer les tuyaux dont les extrémités (3) et (4) sont reliées à des moyens de serrage (5). Selon la caractéristique de la présente invention, les extrémités de la bande (2) sont rigidifiées longitudinalement grâce à des plaquettes (6) et (7) qui assurent une meilleure répartition de la contrainte de serrage. De plus, le collier de serrage (1) présente des moyens d'étanchéité mis en oeuvre au cours de serrage.

FIG.1

L'invention est relative à un collier de serrage. Elle trouvera notamment son application dans l'industrie automobile pour assurer le raccordement et le serrage des différents éléments composant une ligne d'échappement.

Le rôle traditionnel joué par le collier de serrage est d'exercer une contrainte tangentielle sur l'organe autour duquel il est placé afin de provoquer un rétrécissement dans les dimensions et donc un serrage.

Il existe différents types de colliers de serrage dont la constitution et le fonctionnement sont adaptés à l'usage auquel ils sont destinés. En particulier, si outre leur fonction de serrage, ils doivent assurer une étanchéité, dans ce cas, ils doivent bénéficier de certaines spécificités.

En ce qui concerne les colliers de serrage utilisés pour assurer la fixation des différentes pièces composant un ensemble d'échappement sur les automobiles, ils se présentent actuellement sous la forme d'une bague fendue dont les extrémités sont reliées à un boulon de serrage. La bague fendue est découpée et emboutie dans la tôle, ce qui lui permet de résister aux fortes températures susceptibles d'être atteintes.

Les tuyaux d'échappement qui composent la ligne sont emmanchés les uns dans les autres pour assurer l'étanchéité aux jointures. le tuyau supérieur est fendu afin d'autoriser une déformation de son diamètre lors du serrage du collier disposé à la périphérie de l'emmanchement.

Ce dispositif est jugé satisfaisant au montage, quoique l'étanchéité obtenue ne soit pas parfaite; de plus, le collier de serrage peut être de constitution simple.

Cependant, les organes d'échappement sont soumis à l'action de l'oxydation d'autant plus rapidement qu'ils sont portés à température élevée. De plus, ils sont disposés sous le véhicule et donc sujets à recevoir tout type de projection et très rapidement, l'emmanchement des tuyaux devient indémontable. Ce grippage des pièces est problématique étant donné que bien souvent, il faut procéder au remplacement d'une partie de la ligne d'échappement et en raison de cette indémontabilité, l'ensemble de la ligne doit être remplacé inutilement. Les frais occasionnés sont élevés et il y a une insatisfaction de l'automobiliste.

Pour tenter d'apporter une solution à ce problème, certains fabricants ont utilisé l'emboitement bicone. Dans ce cas, l'une des extrémités du tuyau à raccorder présente un évasement divergent, alors que l'autre extrémité du tuyau à raccorder présente une surface de contact chanfreinée extérieurement sur laquelle peut s'appuyer l'évasement du premier tuyau. La fixation de l'emboitement est réalisée à l'aide d'un collier qui présente une gorge en forme de V, venant encercler les deux extrémités de tuyaux.

Pour permettre sa mise en place, le collier doit nécessairement être constitué de deux demi brides, d'où un montage plus difficile que dans le cas de colliers traditionnels. En outre, la fabrication de ce type de collier est plus difficile ce qui en augmente son coût de revient.

Bien que satisfaisante sur le plan technique, cette solution est délicate à mettre en oeuvre, elle est coûteuse, ce qui limite sa généralisation.

La mise en place bout à bout des tuyaux à raccorder est plus satisfaisante car dans ce cas, le façonnage des tuyaux est simplifié d'où une économie. Par contre, il est nécessaire de disposer d'un collier de serrage qui puisse assurer non seulement la liaison mécanique des deux extrémités de tuyaux mais également l'étanchéité du raccordement.

Le but principal de la présente invention est de présenter un collier de serrage plus particulièrement adapté à l'industrie automobile pour assurer le raccordement et le serrage des différents éléments d'une ligne d'échappement, qui autorise la mise en place bout à bout des tuyaux.

La fixation mécanique et l'étanchéité sont assurées avec des facilités de montage et de démontage rencontrées même lorsque les différents organes ont subi une oxydation. L'étanchéité est renforcée pour minimiser les pollutions sonores.

Un autre but de la présente invention est de présenter un collier de serrage dont la fabrication est économique afin de permettre un large développement de son utilisation.

Les temps de montage et de démontage sont très courts pour rester compatibles avec les impératifs de fabrication industrielle ou de mise en oeuvre lors d'interventions après vente.

D'autre buts et avantages de la présente invention apparaitront au cours de la description qui va suivre qui n'est cependant donnée qu'à titre indicatif et qui n'a pas pour but de la limiter.

Selon la présente invention, le collier de serrage, qui trouvera notamment son application dans l'industrie automobile pour assurer le raccordement et le serrage des différents éléments d'une ligne d'échappement dont les tuyaux sont placés bout à bout, le dit collier étant formé d'une bande flexible cintrée en boucle ouverte destinée à ceinturer les tuyaux, dont les extrémités sont reliées à des moyens de serrage, est caractérisé par le fait que les extrémités de la bande sont rigidifiées longitudinalement pour assurer une meilleure répartition de la contrainte de serrage et qu'il présente des moyens d'étanchéité mis en oeuvre au cours du serrage.

L'invention sera mieux comprise à la lecture de la description suivante accompagnée de dessins en annexe parmi lesquels:

-la figure 1 représente une vue axiale du collier de serrage de la présente invention,

-la figure 2 représente une vue longitudinale du collier de serrage,

-la figure 3 schématise la mise en place d'une languette d'étanchéité dans le collier de serrage de la présente invention,

-la figure 4 représente en perspective la languette d'étanchéité de la figure 3,

-la figure 5 représente une vue en coupe sectionnelle de la languette d'étanchéité,

-la figure 6 représente le positionnement de la languette d'étanchéité dans la rainure du collier de serrage,

-la figure 7 illustre la mise en place de butées latérales sur le collier de serrage pour uniformiser la contrainte,

-la figure 8 représente une vue en perspective du collier de serrage avec languette fixée,

-la figure 9 représente en perspective le collier de serrage doté d'une languette en forme de croix selon un mode préférentiel de réalisation de la présente invention,

-la figure 10 illustre la vue en plan de la languette en forme de croix,

-la figure 11 représente une vue en coupe sectionnelle de la languette en forme de croix,

-la figure 12 montre une réalisation du collier de serrage avec une étanchéité assurée par une rustine métallique,

-la figure 13 représente en vue de dessus la rustine métallique de la figure 12,

-la figure 14 illustre un collier de serrage avec une solution ajustée pour l'étanchéité,

-la figure 15 représente en vue de coupe selon l'axe AA de la figure 14 la zone ajustée de la rainure du collier.

La présente invention vise un collier de serrage. Elle trouvera tout particulièrement son application dans l'industrie automobile pour assurer le raccordement et le serrage des différents éléments d'une ligne d'échappement.

Actuellement, le raccordement des différents organes formant une ligne d'échappement est assuré à l'aide d'un emboitement des tuyaux avec serrage circonférentiel du tuyau supérieur fendu pour le déformer et rigidifier la fixation.

Cette technique donne satisfaction si ce n'est que le démontage des tuyaux devient très rapidement impossible en raison du grippage occasionné par l'oxydation des pièces.

Une solution peut être apportée en utilisant un emboitement conique, cependant dans ce dernier cas, le collier de serrage doit nécessairement être formé de deux demi brides, d'où des difficultés de montage et une fabrication plus onéreuse des pièces.

La présente invention concerne plus particulièrement un collier de serrage destiné à assurer la fixation et l'échanchéité de raccordement de deux tuyaux placés bout à bout.

La disposition bout à bout est avantageuse car d'une part la fabrication des tuyaux ne demande aucun usinage particulier de leurs extrémités, par ailleurs, en raison de l'absence d'emboitement, les pièces peuvent facilement être démontées même si elles présentent des traces d'oxydation.

L'une des caractéristiques d'un collier de serrage destinée à assurer l'assemblage de tuyaux placés bout à bout, est d'être relativement long afin de se fixer sur les deux pièces. Aussi, des techniques particulières de serrage doivent être utilisées à cette occasion.

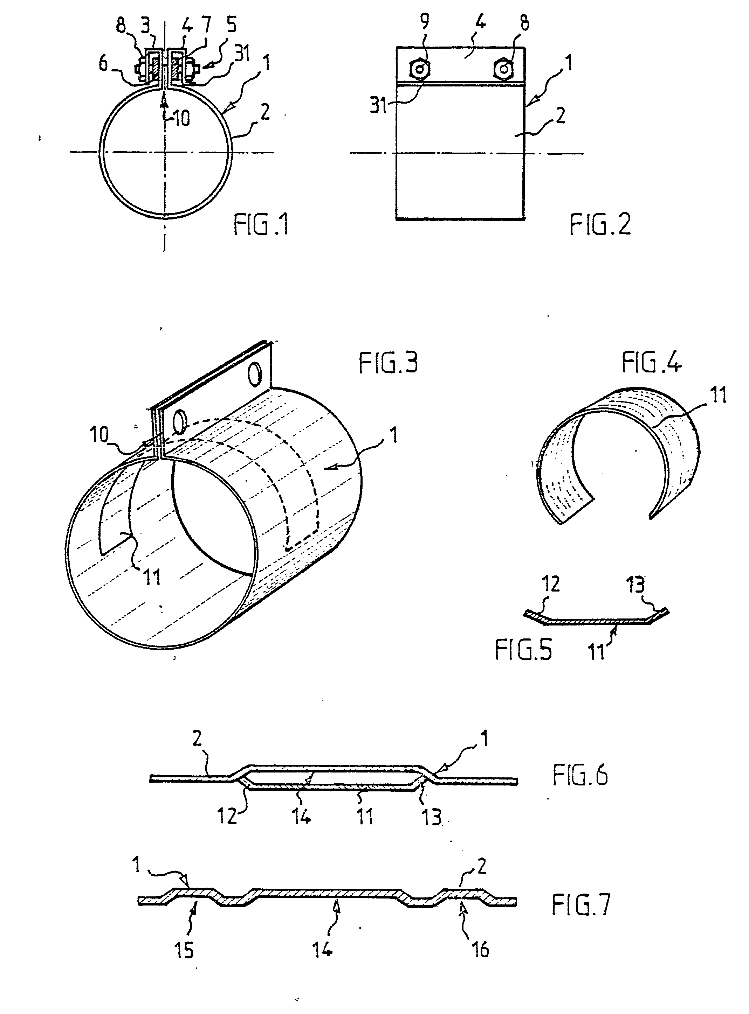

Les figures 1 et 2 représentent respectivement, le collier de serrage 1 de la présente invention, en vue axiale et en vue longitudinale.

Le collier 1 est formé d'une bande flexible 2 cintrée en boucle ouverte destiné à ceinturer les tuyaux à raccorder.

Les extrémités 3 et 4 de la bande flexible 2 sont reliées à des moyens de serrage 5 qui permettent d'exercer une contrainte circonférentielle de serrage du collier sur les tuyaux.

Selon la caractéristique principale de la présente invention, les extrémités 3 et 4 de la bande sont rigidifiées longitudinalement pour assurer une meilleure répartition de la contrainte de serrage.

Cette répartition du serrage est importante pour deux raisons. D'une part sur le plan mécanique, il est nécessaire d'obtenir une liaison solide entre le collier de serrage et les deux tuyaux pour que notamment les vibrations ne puissent provoquer le désembranchement des différents organes de la ligne d'échappement. En second lieu, la répartition de la contrainte constitue un facteur favorable pour assurer une bonne étanchéité de la jonction.

Il faut d'ailleurs souligner qu'en matière de construction automobile, les matériaux utilisés pour la confection de la ligne d'échappement sont de faible épaisseur et par conséquent, toute contrainte localisée aurait pour effet de déformer le tuyau sans pour autant obtenir une fixation rigide.

La rigidification des extrémités 3 et 4 de la bande 2 du collier 1 peut par exemple être obtenue en accroissant l'épaisseur de la bande à ce niveau, toutefois dans le cadre de la présente description, il est préconisé d'utiliser des plaquettes 6 et 7 autour desquelles les extrémités 3 et 4 de la bande 2 sont enroulées telles qu'illustrées à la figure 1.

Les plaquettes 6 et 7 seront par exemple métalliques de forte épaisseur ce qui rendra meilleure la répartition de la contrainte le long du collier 1. Cette dernière est exercée par les moyens 5 qui par exemple peuvent se présenter sous la forme de deux boulons 8 et 9, qui malgré leur traction locale engendreront une contrainte tangentielle quasi-uniforme le long du collier 1 grâce à la présence des éléments de rigidification 6 et 7, traversés par les boulons 8 et 9.

L'utilisation de deux dispositifs de serrage tels que les boulons 8 et 9 est avantageuse car elle permet de compenser de faibles variations dans le dimensionnement des tuyaux à raccorder.

La seconde fonction du collier de serrage 1 de la présente invention est d'assurer l'échanchéité de la liaison. En raison de la fente 10, présente entre les extrémités 3 et 4, de la bande 2, des déperditions sont à craindre à ce niveau. Aussi, selon la caractéristique principale de la présente invention, le collier de serrage 1 présente des moyens d'étanchéité mis en oeuvre au cours du serrage. Ces moyens d'étanchéité assurent la continuité de la jonction des tuyaux d'échappement et évitent toute pollution sonore à ce niveau.

les figures 3 et 4 illustrent respectivement la mise en place de ces moyens d'étanchéité dans le collier de serrage ainsi que la réalisation de ces moyens d'étanchéité proprement dits.

Les moyens d'étanchéité se présentent sous la forme d'une languette 11 flexible disposée dans le collier 1. Cette languette est destinée à venir recouvrir la jonction de contact des tuyaux à assembler, et en particulier la languette 11 recouvre la fente 10 du collier de serrage 1. De la sorte, la languette 11 vient s'interposer entre l'atmosphère et la jonction des tuyaux à raccorder au niveau de la jonction du collier entre les extrémités 3 et 4. La languette 11 bénéficie du serrage circonférentiel occasionné par le collier 1 et par conséquent se déforme pour épouser la forme des tuyaux.

Pour éviter qu'il ne puisse se produire de fuites de gaz d'échappement entre le collier de serrage 1 et la partie supérieure de la languette 11, cette dernière présente de préférence un profil sectionnel identique à celui illustré à la figure 5.

Les bords latéraux 12 et 13 de la languette 11 sont recourbés et déformables pour établir un contact étroit entre le collier de serrage 1 et la languette.

Pour que la languette puisse tenir d'elle-même en place dans le collier de serrage 1, de préférence, la longueur de la languette 1 sera supérieure au demi périmètre intérieur du collier 1.

La figure 6 représente une vue en coupe sectionnelle de la bande 2 du collier de serrage 1 avec la mise en place d'une languette 11 dont les bords 12 et 13 sont recourbés.

Etant donné la surépaisseur provoquée par la mise en place de la languette 11, et pour obtenir une bonne répartition de la contrainte de serrage, de préférence, le collier de serrage 1 présente une rainure intérieure 14 dans laquelle vient se loger la languette 11.

Une distribution plus uniforme de l'effort peut être obtenue en réalisant des butées latérales 15 et 16 de part et d'autre de la rainure 14 sur la bande 2 du collier de serrage 1 tel qu'illustré à la figure 7.

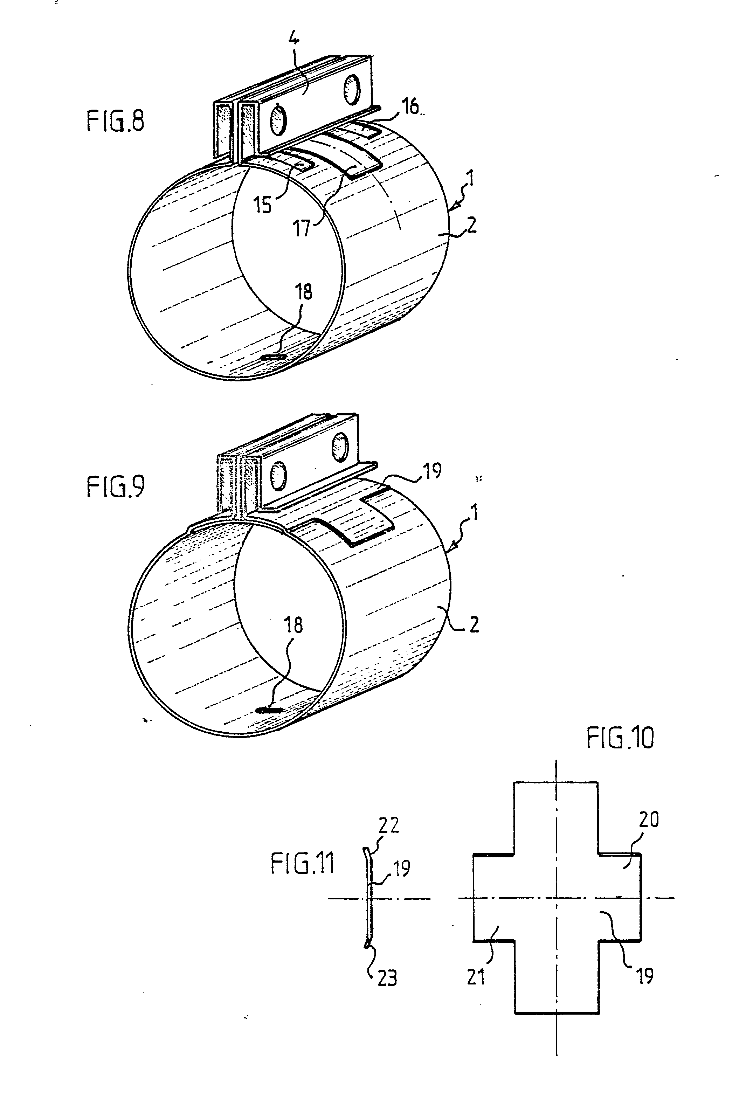

L'inconvénient de la languette 11 décrite est qu'il s'agit d'un élément indépendant du collier qui peut par conséquent se perdre ou mal se positionner aussi, de préférence, l'utilisation d'une languette 17 telle qu'illustrée à la figure 8 plus courte et dont l'une de ses extrémités est fixée sur la bande 2 du collier est choisie.

Il faut également noter que l'on pourra judicieusement disposer dans la partie centrale intérieure du collier 1, une ou plusieurs butées 18 axiale qui imposera le positionnement des tuyaux à raccorder.

La figure 9 illustre un autre mode préférentiel de réalisation de l'invention. Il s'agit d'un collier de serrage 1 pour lequel on utilise comme moyens d'étanchéité, une languette 19 en forme de croix.

La largeur de cette languette 19 correspond à la largeur du collier ce qui présente un avantage car dans ce cas, on est assuré de la répartition longitudinale uniforme de la contrainte de serrage. En effet, il n'y a pas de variation d'épaisseur du collier dans la zone de serrage qui est entièrement doublée à ce niveau par la languette 19.

La bande 2 du collier 1 présente une empreinte correspondante à la forme en croix de la languette 19 afin que cette dernière puisse venir se loger sans provoquer de déformation de la bande 2.

La figure 9 illustre la vue déployée de la languette 19 dans laquelle on peut remarquer les développements latéraux 20 et 21 destinés à venir envelopper la zone de raccordement des tuyaux et masquer la fente du collier de serrage 1.

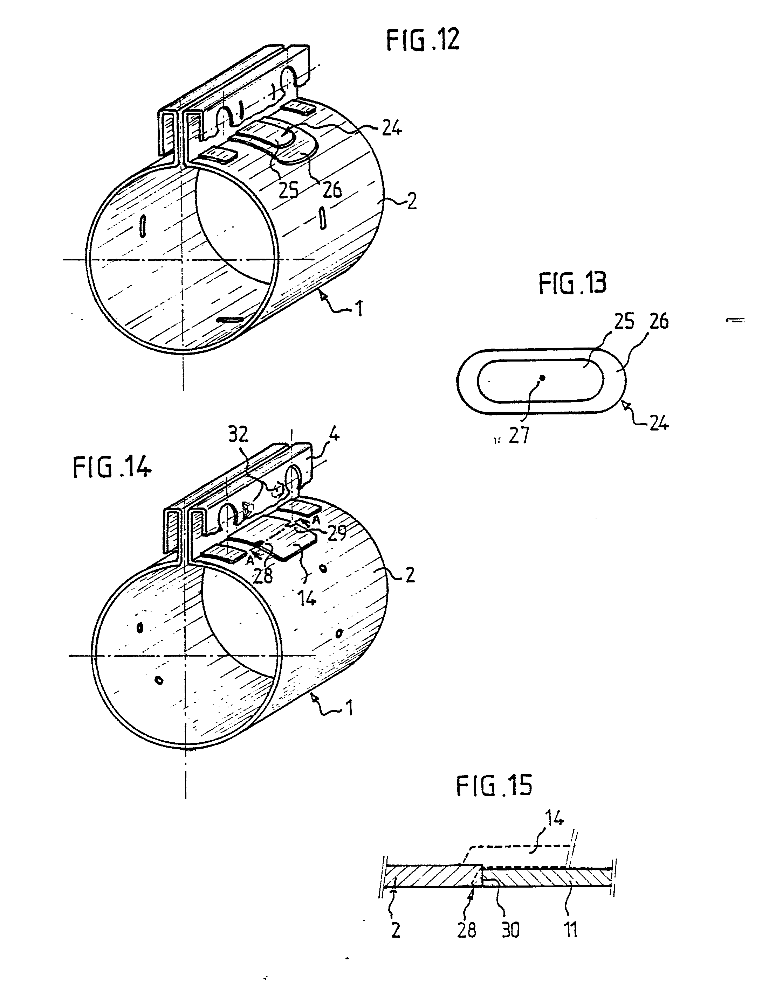

La figure 11 représente en vue de coupe sectionnelle les développements 20 et 21 de la languette 19 en forme de croix, dans laquelle on peut voir les bordures latérales 22 et 23 recourbées pour améliorer l'étanchéité de l'ensemble.

Le serrage du collier, réalisé par le vissage des boulons 8 et 9 provoque l'application de la languette sur les tuyaux, et un serrage énergique permet d'assurer une bonne étanchéité.

Des essais ont montré qu'il était difficile d'obtenir une application étroite de la languette d'étanchéité au niveau de la jointure des tuyaux d'échappement. Il faut en effet adopter un compromis entre la flexibilité de la languette qui permet d'exercer une contrainte élastique indispensable pour éviter les fuites, et une déformabilité souple de la languette qui lui permet d'épouser les formes rencontrées qui parfois présentent certaines irrégularités et défauts de surface.

La solution préconisée est illustrée à la figure 12 dans laquelle les moyens d'étanchéité 24 se présentent sous la forme d'une languette flexible 25 doublée d'une rustine de tôle fine 26, représentée en vue de dessus à la figure 13.

La rustine 26 déborde de la languette flexible 25 et assure un recouvrement total de la jointure des tuyaux d'échappement.

Les propriétés respectives de la languette flexible 25 et de la rustine de tôle fine 26 permettent d'obtenir une étanchéité renforcée.

La liaison de la languette flexible 25 et de la rustine de tôle fine 26 peut par exemple être réalisée à l'aide d'un point de soudure central 27.

Dans le cas d'utilisation de ces moyens d'étanchéité 24, la bande 2 du collier 1 présente une rainure dont l'empreinte correspond au profil transversal de la languette 25 et de la rustine 26.

L'utilisation d'une languette d'étanchéité 11 telle que décrite précédemment souffre de l'inconvénient d'avoir des fuites de gaz d'échappement qui remontent latéralement entre les bords de la languette 11 le long des côtés de la rainure 14. Ces pertes sont faibles mais néanmoins préjudiciables.

Aussi, selon une solution plus élaborée de la présente invention, celle-ci présente des moyens d'ajustement du positionnement axial des moyens d'étanchéité, en l'occurrence la languette 11. Ces moyens d'ajustement du positionnement axial forment des points d'arrêt aux fuites de gaz d'échappement, ce qui améliore très sensiblement l'étanchéité du collier de serrage.

Ces points d'arrêt 28 et 29 sont illustrés à la figure 14. Ils sont disposés au niveau des bordures latérales de la rainure 14 destinées à recevoir la languette 11 d'étanchéité.

Sur le plan de la fabrication, le point d'arrêt tel qu'illustré à la figure 15 en vue de coupe, est formé par un contre-emboutissage local de la bande 2 du collier 1.

La rainure 14 est formée par un emboutissage et est illustrée à la figure 15 en pointillé. Le contre-emboutissage 28 a pour but de provoquer un découpage partiel de la bande et de ramener la bande découpée dans l'axe de la languette 11 qui vient ainsi en butée sur la tranche 30 découpée. En réalisant cette opération de chaque côté de la rainure 14, il est possible d'obtenir un intervalle séparant les tranches des points d'arrêt précis correspondant à la largeur de la languette dont le positionnement axial est ainsi ajusté. La réduction importante du jeu latéral qui peut être obtenue de la sorte, minimise très fortement les fuites de gaz d'échappement à ce niveau.

Il faut préciser à ce sujet, que le contre-emboutissage 28 présente vis-à-vis de l'emboutissage de la rainure 14 une zone commune d'appui dans sa partie supérieure correspondant sensiblement au dizième de l'épaisseur de la bande 2 du collier 1.

Par ailleurs, une attention particulière doit être apportée en ce qui concerne le serrage du collier 1. En effet, les vibrations de la ligne d'échappement ont pour fâcheuse conséquence de provoquer le déserrage des boulons 8 et 9.

Pour empêcher ce phénomène, différentes solutions peuvent être utilisées néanmoins, on pourra avantageusement réaliser un repliage à angle droit 31 de l'extrémité de la bande 2 tel qu'illustré aux figures 1 et 2. Ce repliage à angle droit 31 forme un arrêt pour les écrous 8 et 9 dont les méplats viennent s'appuyer contre le repliage 31. Les écrous sont ainsi immobilisés en rotation.

Une autre réalisation d'un blocage est illustrée à la figure 14, dans laquelle l'extrémité 4 de la bande 2 présente des découpes saillantes 32 qui viennent s'appuyer contre les méplats des boulons de serrage correspondant. De même que dans le cas du repliage à angle droit 31, les découpes saillantes 32 forment des obstacles à la rotation des boulons et évitant ainsi leur déserrage.

D'autres mises en oeuvre de la présente invention, à la portée de l'Homme de l'Art, auraient également pu être envisagées sans pour autant sortir du cadre de celle-ci.

## Revendications

1. Collier de serrage, qui trouvera notamment son application dans l'industrie automobile pour assurer le raccordement et le serrage des différents éléments d'une ligne d'échappement dont les tuyaux sont placés bout à bout, le dit collier (1) étant formé d'une bande (2) flexible cintrée en boucle ouverte destinée à ceinturer les tuyaux, dont les extrémités (3) et (4) sont reliées à des moyens de serrage (5), caractérisé par le fait que les extrémités (3) et (4) de la bande (2) sont rigidifiées longitudinalement pour assurer une meilleure répartition de la contrainte de serrage et qu'il présente des moyens d'étanchéité (11) mis en oeuvre au cours du serrage.

2. Collier de serrage selon la revendication 1, caractérisé par le fait que les moyens d'étanchéité (11) sont déformambles pour s'appliquer contre la jointure des tuyaux.

3. Collier de serrage selon la revendication 1, caractérisé par le fait qu'il présente des moyens d'ajustement du positionnement axial des moyens d'étanchéité (11).

4. Collier de serrage selon la revendication 1, dont les moyens de serrage se composent de deux boulons tangentiels (8) et (9), caractérisé par le fait que les extrémités (3) et (4) de la bande (2) sont rigidifiées par la mise en place de plaquettes (6) et (7) autour desquelles la bande (2) est enroulée.

5. Collier de serrage selon la revendication 1, caractérisé par le fait que le moyens d'étanchéité (11) se présentent sous la forme d'une languette flexible disposée dans le collier (1).

6. Collier de serrage selon la revendication 1, caractérisé par le fait que les moyens d'étanchéité (11) se présentent sous la forme d'une languette flexible (25) doublée d'une rustine (26) de tôle fine.

7. Collier de serrage selon la revendication 5, caractérisé par le fait que la longueur de la languette d'étanchéité (11) est supérieure au demi périmètre du collier de serrage (1).

8. Collier de serrage selon la revendication 5, caractérisé par le fait que la bande (2) présente une rainure (14) centrale destinée à recevoir la languette (11) sont d'étanchéité.

9. Collier de serrage selon la revendication 5, caractérisé par le fait que les bords (12) et (13) de la languette (11) sont déformables.

10. Collier de serrage selon la revendication 5, caractérisé par le fait que la languette (17) est fixée par l'une de ses extrémités à la bande (2) du collier (1).

11. Collier de serrage selon la revendication 1, caractérisé par le fait qu'il présente deux butées latérales (15) et (16) destinées à obtenir une meilleure répartition longitudinale de l'effort.

12. Collier de serrage selon la revendication 5, caractérisé par le fait que la languette (19) présente une forme en croix dont la largeur correspond à celle de la bande (2) du collier (1).

13. Collier de serrage selon la revendication 1, caractérisé par le fait que la bande (2) présente au moins une butée centrale (18) destinée au positionnement axial des tuyaux.

14. Collier de serrage selon la revendication 3, caractérisé par le fait que les moyens d'ajustement se présentent sous la forme de contre-emboutis (28 et 29) disposés sur les bords latéraux de la rainure (14).

FIG.1

FIG.2

FIG.3

FIG.4

FIG.5

FIG.6

FIG.7

FIG.8

FIG.9

FIG.10

FIG.11

FIG .12

FIG .13

FIG .14

FIG .15

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 466 642  (S. TONCHEN) <br> * Figures 1-4; colonne 2, lignes 18-32; colonne 5, lignes 29-61 * | 1-4 | F 16 L  21/06 |
| A | | 7-9,13 | |
| | --- | | |
| X | US-A-2 227 551  (J.L. MORRIS) <br> * Figures; page 1, colonne de droite, lignes 34-39 * | 1,2 | |
| A | | 4-7 | |
| | ----- | | |

| DOMAINES TECHNIQUES RECHERCHES (Int. Cl.4) |
|---|
| F 16 L |

Le présent rapport de recherche a été établi pour toutes les revendications

| Lieu de la recherche | Date d'achèvement de la recherche | Examinateur |
|---|---|---|
| LA HAYE | 02-12-1986 | NARMINE |